# EUROPÄISCHE PATENTSCHRIFT

(11) **EP 0 286 794 B1**
(45) Veröffentlichungstag und Bekanntmachung des Hinweises auf die Patenterteilung: **20.10.1993**
(21) Anmeldenummer: 88101978.0
(22) Anmeldetag: 11.02.1988
(51) Int. Cl.: H04M 3/58, H04Q 11/04

(54) **Verfahren zum Aufbauen von Rückfrageverbindungen in Fernsprechvermittlungsanlagen, insbesondere Fernsprechneben stellenanlagen**
Method for setting up call-back connections in telephone exchanges, especially private branch exchanges
Méthode pour réaliser des connexions double appel dans des centraux téléphoniques, en particulier des centraux téléphoniques privés

(30) Priorität: 14.04.1987 DE 3712570
(43) Veröffentlichungstag der Anmeldung: 19.10.1988
(73) Patentinhaber: TELENORMA GMBH, 60326 Frankfurt am Main (DE)
(72) Erfinder: Ertner, Klaus, D-6272 Niedernhausen (DE); Müller, Walter, Dipl.-Ing., D-6500 Mainz 42 (DE); Kretz, Hans-Joachim, D-6000 Frankfurt/Main (DE)

(56) Entgegenhaltungen:
- WO-A-80/02094
- N.E.C. RESEARCH & DEVELOPMENT, Nr. 81, April 1986, Seiten 78-85; Y. MURATA et al.: "New digital key telephone systems DK-16/DK-32/DK-64"
- PATENT ABSTRACTS OF JAPAN, Band 10, Nr. 168 (E-411)[2224], 14. Juni 1986 & JP-A-61 19 268

## Beschreibung

Die Erfindung betrifft ein Verfahren zum Aufbauen von Rückfrageverbindungen in Fernsprechvermittlungsanlagen, insbesondere Fernsprechnebenstellenanlagen, nach dem Oberbegriff des Patentanspruchs 1.

Ein bei Fernsprechnebenstellenanlagen sehr wesentliches Merkmal ist die sogenannte Rückfrage. Es handelt sich dabei um eine Verbindungsart, die,wie der Name schon sagt, eine Rückfrage zu einem Dritten, dem rückgefragten Teilnehmer erlaubt, wenn bereits eine Verbindung zwischen zwei Teilnehmern besteht. Wie eine solche Rückfrageverbindung aufgebaut wird, ist in der DE-PS 596 719 beschrieben. Es handelt sich hierbei um eine Schaltungsanordnung für Nebenstellenanlagen mit Wählerbetrieb, wobei das Kriterium für die Einleitung der Rückfrage, das vom rückfragenden Teilnehmer abgegeben wird, von Relais aufgenommen wird. Die Voraussetzung für den Aufbau einer Rückfrageverbindung bestand früher in der Nebenstellentechnik immer darin, daß eine Amtsverbindung mit einem Nebenstellenteilnehmer besteht. Nur dann war der Nebenstellenteilnehmer in der Lage,eine Rückfrageverbindung einzuleiten.

Die Ausstattungsvorschriften für moderne Fernsprechnebenstellenanlagen lassen auch Rückfrageverbindungen zu, wenn Verbindungen zwischen zwei Nebenstellenteilnehmern, also sogenannte Internverbindungen, bestehen. Dabei kann sowohl der rufende Teilnehmer als auch der gerufene Teilnehmer Rückfrageverbindungen aufbauen.

Ein Verfahren zum Aufbauen von Rückfrageverbindungen in Fernsprechnebenstellenanlagen ist in der DE-PS 31 10 653 beschrieben. Es handelt sich hierbei um ein Verfahren, welches durch eine zentral mit Programmen arbeitende Steuerung der Nebenstellenanlage verwirklicht wird. Dieses Verfahren besteht darin, daß auch ein rückgefragter Teilnehmer seinerseits eigene Rückfrageverbindungen aufbauen kann. In der Beschreibungseinleitung dieser Patentschrift (Spalten 2 und 3) sind weitere mit dem Merkmal Rückfrage in Verbindung zu bringende Variationen und Weiterbildungen dieses Merkmals beschrieben. Es sind außerdem weitere Schriften dort genannt, die sich mit dem Merkmal Rückfrage in Fernsprechnebenstellenanlagen befassen.

Bei allen bekannten Arten des Merkmals Rückfrage ist es bisher immer notwendig, daß vom Fernsprechendgerät des rückfragenden Teilnehmers aus ein besonderes Kennzeichen zur Einleitung der Rückfrageverbindung abgegeben wird. Bei dieser Einleitung des Aufbaus einer Rückfrageverbindung wird nach dem bisherigen Stand der Technik immer die bestehende Gesprächsverbindung unterbrochen, wobei der bisherige Gesprächspartner in eine Wartestellung gerät. Diese Wartestellung besteht also schon während des gesamten Aufbaus einer Rückfrageverbindung und bleibt so lange bestehen, bis sich der rückfragende Teilnehmer auf die vorherige Gesprächsverbindung zurückschaltet oder die Verbindung auslöst. Der Gesprächspartner eines rückfragenden Teilnehmers gerät also immer sofort in eine Wartestellung, wenn eine Rückfrageverbindung eingeleitet wird, und zwar auch dann, wenn die Rückfrageverbindung nicht zum Erfolg führt, weil der rückgefragte Teilnehmer besetzt ist oder sich nicht meldet.

Die Aufgabe der Erfindung besteht darin, ein Verfahren anzugeben, womit es möglich ist, beim Einleiten einer Rückfrageverbindung die erste Gesprächsverbindung so lange wie möglich bestehen zu lassen. Dabei sollen andere mit dem Merkmal Rückfrage zusammenhängende Zusatzmerkmale nicht beeinträchtigt werden.

Diese Aufgabe wird durch eine Merkmalskombination gelöst, wie sie im Patentanspruch 1 angegeben ist.

Damit wird in vorteilhafter Weise erreicht, daß beim Aufbauen einer Rückfrageverbindung das bisherige Gespräch so lange weitergeführt werden kann, bis der rückfragende Teilnehmer sich nach der für ihn sichtbaren Meldung des rückgefragten Teilnehmers dazu entschließt, die Rückfrageverbindung zu aktivieren. Kommt eine Rückfrageverbindung nicht zustande, weil der rückgefragte Teilnehmer sich nicht meldet, so wird die bisher bestehende Verbindung dabei überhaupt nicht unterbrochen. Durch die in den Unteransprüchen angegebenen Weiterbildungen der Erfindung wird erreicht, daß auch Zusatzmerkmale der Rückfrage ohne weiteres mit dem bereits erwähnten Vorteil durchzuführen sind. Durch die Anschaltung eines Hörtons oder einer Ansage für den rückgefragten Teilnehmer wird erreicht, daß dieser darüber informiert wird, daß eine Rückfrageverbindung auf ihn zukommt, wenn er sich bereits meldet, bevor die Rückfrageverbindung aktiviert ist.

Ein Ausführungsbeispiel der Erfindung wird nachfolgend anhand einer Zeichnung näher erläutert. Es sei angenommen, daß ein Teilnehmer A, der über eine digitale Anschlußleitung an eine Vermittlungsanlage VA angeschlossen ist, mit einer Externleitung EL im Falle einer Externverbindung oder mit einem weiteren Teilnehmer B im Falle einer Internverbindung, zusammengeschaltet ist. Alle Teilnehmeranschlüsse A,B,C und weitere nicht dargestellte Anschlüsse sowie die Externleitungen EL werden digital betrieben, wobei jeder Anschlußleitung mindestens ein Nutzdatenkanal NB und ein Signalisierungskanal S zugeordnet ist. Die Nutzdaten,gleich welcher Art, werden ausschließlich digital übertragen, wobei im Falle des Fernsprechens die bekannte Pulscodemodulation PCM mit einer Bitrate von beispielsweise 64 k Bit/s zur Anwendung kommt. Auf dem Signalisierungskanal S werden ebenfalls digitale Informationen mit einer niedrigeren Bitrate übertragen, wobei diese hauptsächlich für die Durchgabe vermittlungstechnischer Kriterien vorgesehen sind.

Während des Bestehens einer Gesprächsverbindung beispielsweise zwischen dem Teilnehmer A und dem Teilnehmer B wird die digitalisierte Sprachinformation über den Nutzdatenkanal NB ausgetauscht. Ohne diese Sprechverbindung zu unterbrechen, kann nun einer der beiden Teilnehmer A oder B eine weitere Verbindung zu einem dritten Teilnehmer C aufbauen. Dies geschieht dadurch, daß beispielsweise vom Teilnehmer A mit der am Endgerät befindlichen Tastatur TA die Rufnummer des in Rückfrage anzurufenden Teilnehmers C eingetastet wird. Die Daten dieser Rufnummer werden entweder sukzessive oder nach dem Ende der Eingabe insgesamt als Wahlinformation über den Signalisierungskanal S zur Vermittlungsanlage VA übertragen. Die Vermittlungsanlage VA baut daraufhin in bekannter Weise eine Verbindung zum rückgefragten Teilnehmer C auf, wobei geprüft wird, ob der Anschluß frei oder besetzt ist. Das Ergebnis dieser Prüfung wird von der Vermittlungsanlage VA aus ebenfalls über den Signalisierungskanal S zum rückfragenden Teilnehmer A übertragen. Daraufhin erscheint in der Anzeige ANZA zusätzlich zur Anzeige der bereits bestehenden Verbindung die Rufnummer und der Betriebszustand des in Rückfrage angerufenen Teilnehmers C. Währenddessen besteht immer noch die vorher gewesene Verbindung beispielsweise mit dem Teilnehmer B.

Durch Beobachten der Anzeige in der Anzeigeeinrichtung ANZA kann der rückfragende Teilnehmer A feststellen, wann der rückgefragte Teilnehmer C sich meldet. Erst zu diesem Zeitpunkt wird die bereits vorher bestehende Gesprächsverbindung in irgendeiner Weise beeinflußt. Der rückfragende Teilnehmer A kann sich nämlich jetzt zum rückgefragten Teilnehmer C umschalten, wozu eine Funktionstaste oder eine Zifferntaste zu betätigen ist. Schaltet sich der rückfragende Teilnehmer A in die Rückfrageverbindung ein, um ausschließlich mit dem rückgefragten Teilnehmer C zu sprechen, so gerät der bisherige Gesprächspartner, also der Teilnehmer B,in eine Wartestellung. Eine andere Möglichkeit besteht darin, daß der rückfragende Teilnehmer A eine andere Funktionstaste oder eine andere Zifferntaste betätigt, um den in Rückfrage angerufenen Teilnehmer C an seinem, beispielsweise mit dem Teilnehmer B geführten Gespräch zu beteiligen. Bei einer derartigen Verfahrensweise braucht ein bestehendes Gespräch überhaupt nicht unterbrochen zu werden, sondern es sollte lediglich der Gesprächspartner von der Hinzuschaltung eines dritten Teilnehmers C unterrichtet werden.

Es ist ebenfalls nicht notwendig, ein bestehendes Gespräch zu unterbrechen, wenn eine Rückfrageverbindung nicht zum Erfolg führt, weil der in Rückfrage angerufene Teilnehmer C besetzt ist oder sich nicht meldet. In einem solchen Fall genügt es, durch Betätigen einer Funktionstaste oder einer Zifferntaste die Rückfrageverbindung wieder auszulösen, wobei das bestehende Gespräch nicht beeinflußt wird. Der rückfragende Teilnehmer hat jedoch auch die Möglichkeit, sich vor dem Melden des rückgefragten Teilnehmers C aus der bestehenden Verbindung auszuschalten und in die Rückfrageverbindung einzutreten. Dies ist beispielsweise dann von Vorteil, wenn an der Anzeige ANZA erkannt wird, daß der in Rückfrage angerufene Teilnehmer C besetzt ist und eine Aufschaltung durchgeführt werden soll. Dies geschieht in bekannter Weise dadurch, daß der Vermittlungsanlage VA von der Teilnehmerstelle aus ein besonderes Kriterium mitgeteilt wird, welches bei digitalen Anschlüssen über den Signalisierungskanal S übertragen wird.

Es ist außerdem möglich, daß der rückfragende Teilnehmer A sich abwechselnd in die bereits bestehende Rückfrageverbindung und in die vorher gewesene Verbindung einschaltet, um nacheinander mit den verschiedenen Teilnehmern zu sprechen. Dieses an sich bekannte, mit Makeln bezeichnete Merkmal ist also auch dann möglich, wenn die Rückfrageverbindung in der bereits beschriebenen Weise aufgebaut wird. Auch andere im Zusammenhang mit der Rückfrage vorkommende Merkmale, wie Dreiergespräch und Aufschalten lassen sich wie bereits beschrieben verwirklichen, ohne daß durch die neuartige Weise des Verbindungsaufbaus ein Nachteil entsteht.

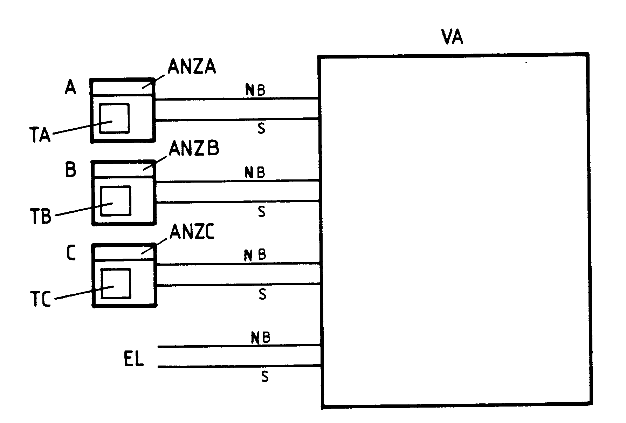

## Patentansprüche

1. Verfahren zum Aufbauen von Rückfrageverbindungen in Fernsprechvermittlungsanlagen, insbesondere Fernsprechnebenstellenanlagen, wobei während einer zwischen einem ersten Teilnehmer und einem zweiten Teilnehmer bestehenden Gesprächsverbindung eine weitere Verbindung von einem der beiden Gesprächspartner, dem rückfragenden Teilnehmer, aus zu einem dritten Teilnehmer hin aufgebaut wird, und währenddessen die Verbindungsbeziehung zwischen dem ersten und dem zweiten Teilnehmer erhalten bleibt, und wobei die Teilnehmer über digitale Anschlußleitungen betrieben werden, die neben mindestens einem Nutzdatenkanal einen Signalisierungskanal aufweisen,
dadurch gekennzeichnet,
daß bei der Einleitung einer Rückfrageverbindung die Gesprächsverbindung zwischen dem ersten Teilnehmer (A) und dem zweiten Teilnehmer (B) nicht unterbrochen wird, wenn von einem der beiden Teilnehmer (A oder B), ohne ein besonderes Kennzeichen abzugeben, einfach die Rufnummer eines in Rückfrage anzurufenden dritten Teilnehmers (C) eingegeben wird, wobei diese Information über den Signalisierungskanal (S) zur Vermittlungsanlage (VA) hin übertragen wird,
woraufhin ohne Beeinflussung der ersten Gesprächsverbindung die Rückfrageverbindung zum dritten Teilnehmer (C) aufgebaut wird,
daß der Frei- oder Besetztzustand sowie die Meldung des rückgefragten dritten Teilnehmers (C) über den Signalisierungskanal zum rückfragenden Teilnehmer (A oder B) hin übertragen und dort angezeigt wird,
und daß der rückfragende Teilnehmer (A oder B) durch Abgabe eines Kennzeichens erst dann seine Gesprächsverbindung zum dritten Teilnehmer umschaltet oder durchschaltet,wenn dieser sich gemeldet hat.

2. Verfahren nach Anspruch 1,
dadurch gekennzeichnet,
daß bei einer Umschaltung zur Rückfrageverbindung der bisherige Gesprächsteilnehmer (B oder A) in eine Wartestellung geschaltet wird.

3. Verfahren nach Anspruch 1,
dadurch gekennzeichnet,
daß eine Umschaltung zur Rückfrageverbindung auch vor der Meldung des rückgefragten Teilnehmers (C) erfolgen kann, wobei im Besetztfall eine evtl. Aufschaltung möglich ist.

4. Verfahren nach Anspruch 1,
dadurch gekennzeichnet,
daß nach der Meldung des rückgefragten Teilnehmers (C) dieser an dem bereits bestehenden Gespräch beteiligt werden kann.

5. Verfahren nach Anspruch 1,
dadurch gekennzeichnet,
daß der rückfragende Teilnehmer (A oder B) durch Abgabe von Kennzeichen sich wechselweise an die Rückfrageverbindung oder an die bisherige Verbindung anschalten kann.

6. Verfahren nach Anspruch 1,
dadurch gekennzeichnet,
daß der in Rückfrage angerufene Teilnehmer (C) bei seiner Meldung einen besonderen Hörton oder eine Ansage erhält, wenn der rückfragende Teilnehmer (A oder B) die Rückfrageverbindung noch nicht aktiviert hat.

## Claims

1. Method for the establishment of call-back connections in telephone exchanges, in particular in private branch exchanges, wherein - during a speech connection existing between a first subscriber and a second subscriber - a further connection is established from one of both the partners in conversation, the subscriber calling back, to a third subscriber and the connected relationship remains maintained between the first and the second subscriber and wherein the subscribers are operated by way of digital connection lines which display a signalling channel apart from at least one information data channel, characterised thereby, that on the initiation of a call-back connection, the speech connection between the first subscriber (A) and the second subscriber (B) is not interrupted when the telephone number of a third subscriber (C), who is to be called in call-back, is simply entered by one of both the subscribers (A and B) without giving a special indication, wherein this information is transmitted by way of the signalling channel (S) to the exchange (VA), whereupon the call-back connection to the third subscriber (C) is established without affecting the first speech connection, that the free or engaged state as well as the report of the third subscriber (C) called-back is transmitted by way of the signalling channel (S) to the subscriber (A or B) calling back and indicated there and that the subscriber (A or B) calling back switches his speech connection over or through to the third subscriber by giving an indication only after the third subscriber has reported.

2. Method according to claim 1, characterised thereby, that on a switching-over to the call-back connection, the previous partner (B or A) in conversation is switched into a holding position.

3. Method according to claim 1, characterised thereby, that a switching-over to the call-back connection can also take place before the report of the subscriber (C) called back, for which a possible switching-in is available in the engaged case.

4. Method according to claim 1, characterised thereby, that after the report of the subscriber (C) called back, this subscriber may be allowed to participate in the already existing conversation.

5. Method according to claim 1, characterised thereby, that the subscriber (A or B) calling back can by giving indications switch himself alternatively to the call-back connection or to the previous connection.

6. Method according to claim 1, characterised thereby, that the subscriber (C) dial led in call-back on his report receives a special audible tone or an announcement when the subscriber (A or B) calling back has not yet activated the call-back connection.

## Revendications

1. Procédé pour établir des liaisons de double appel dans des, centraux téléphoniques, notamment des centraux téléphoniques privés, selon lequel, pendant une liaison téléphonique existant entre un premier abonné et un second abonné, une autre liaison est établie par l'un des deux partenaires téléphoniques, l'abonné effectuant le double appel, en direction d'un troisième abonné, et, entre-temps, la liaison entre le premier abonné et le second abonné reste maintenue, et selon lequel les abonnés sont interconnectés par l'intermédiaire de lignes de raccordement numériques, qui possèdent, à côté d'au moins un canal de données utiles, un canal de signalisation, caractérisé en ce
que, lors du déclenchement d'une liaison de double appel, la liaison téléphonique entre le premier abonné (A) et le second abonné (B) n'est pas interrompue lorsque l'un des deux abonnés (A ou B) a simplement introduit, sans délivrer de signal caractéristique particulier, le numéro d'appel d'un troisième abonné (C) qui doit être appelé en double appel, cette information étant transmise par l'intermédiaire du canal de signalisation (S) au central (VA), à la suite de quoi la liaison de double appel en direction du troisième abonné (C) est établie sans aucune influence sur la première liaison téléphonique,
que l'état libre ou l'état occupé ainsi que la signalisation du troisième abonné (C) appelé en double appel, sont transmis par l'intermédiaire du canal de signalisation à l'abonné effectuant le double appel (A ou B) et est indiqué chez cet abonné, et
que l'abonné (A ou B) exécutant l'appel double commute ou interconnecte sa liaison téléphonique avec le troisième abonné, sous l'effet de la délivrance d'un signal caractéristique, uniquement lorsque cet abonné s'est signalé.

2. Procédé selon la revendication 1, caractérisé en ce que dans le cas d'une commutation pour la liaison à double appel, l'abonné téléphonique (B ou A) jusqu'alors en communication est commuté dans une position d'attente.

3. Procédé selon la revendication 1, caractérisé en ce qu'une commutation pour la liaison de double appel peut être également exécutée avant la signalisation de l'abonné (C) effectuant l'appel double, auquel cas une éventuelle immixtion est possible dans le cas d'occupation.

4. Procédé selon la revendication 1, caractérisé en ce qu'après la signalisation de l'abonné (C) effectuant un double appel, ce dernier peut se joindre à la conversation déjà existante.

5. Procédé selon la revendication 1, caractérisé en ce que l'appelé (A ou B) effectuant un double appel peut se raccorder alternativement, sous l'effet de la délivrance de signaux caractéristique, à la liaison de double appel ou à la liaison précédente.

6. Procédé selon la revendication 1, caractérisé en ce que l'abonné (C) appelé lors du double appel reçoit, lors de sa signalisation, une tonalité acoustique particulière ou une annonce lorsque l'abonné (A ou B) effectuant le double appel n'a pas encore activé la liaison de double appel.
